# EUROPEAN PATENT APPLICATION

(11) **EP 1 997 556 A1**
(43) Date of publication of application: **03.12.2008**
(21) Application number: 07738472.5
(22) Date of filing: 13.03.2007
(51) Int. Cl.: B01J 35/04, B01D 53/86, F01N 3/28

(54) **HONEYCOMB CATALYST STRUCTURE**

(30) Priority: 13.03.2006 JP 2006067562
(71) Applicant: NGK INSULATORS, LTD., Nagoya-shi, Aichi 467-8530 (JP)
(72) Inventor: MIYAIRI, Yukio, Nagoya-shi, Aichi 467-8530 (JP); NODA, Naomi, Nagoya-shi, Aichi 467-8530 (JP); MIWA, Shinichi, Nagoya-shi, Aichi 467-8530 (JP)
(74) Representative: Paget, Hugh Charles Edward
(86) International application number: PCT/JP2007/055001
(87) International publication number: WO 2007/105736

(57) **Abstract**

There is provided a honeycomb catalyst body 100 having a deviation in face positions on the inner side of the cells perpendicular to a direction in which the cells 3 extends of a plurality of plugged portions 10 having predetermined length. The honeycomb catalyst body 100 provides a catalyst converter where thermal stress is dispersed and a local temperature rise in the vicinity of the inlet and the outlet is suppressed. The catalyst converter is hence less apt to crack.

## Description

### TECHNICAL FIELD

The present invention relates to a honeycomb catalyst body where dispersion of inside stress is attempted and which is hardly damaged and excellent in reliability over the long period.

### BACKGROUND ART

There has conventionally been used a catalyst converter where a catalyst for purification is loaded on a catalyst carrier in order to purify target components to be purified such as carbon monoxide (CO), hydrocarbon (HC), nitrogen oxides (NOx), sulfur oxides (SOx) and the like contained in exhaust gas exhausted from engines for an automobile, construction machinery, and industry, burning apparatuses, and the like (see, e.g., Patent Document 1 as a prior art document).

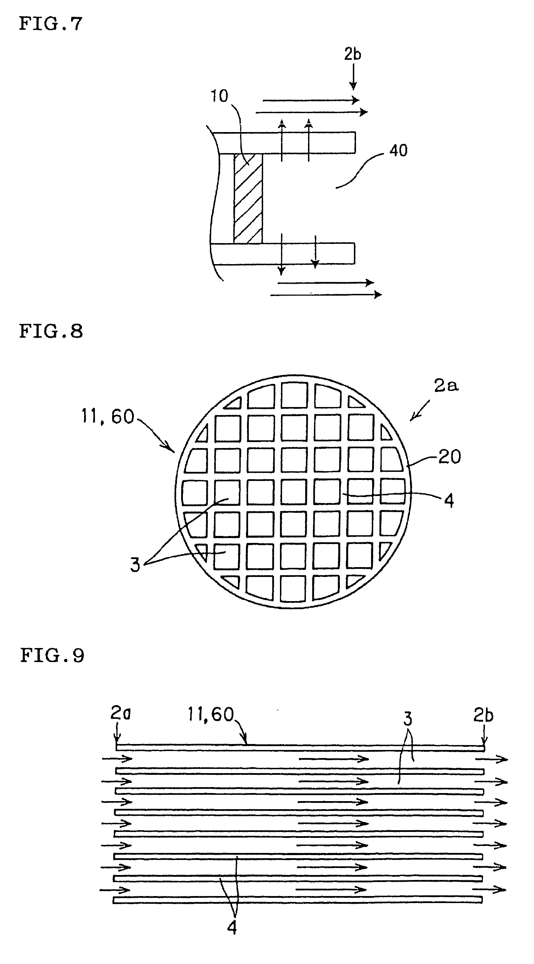

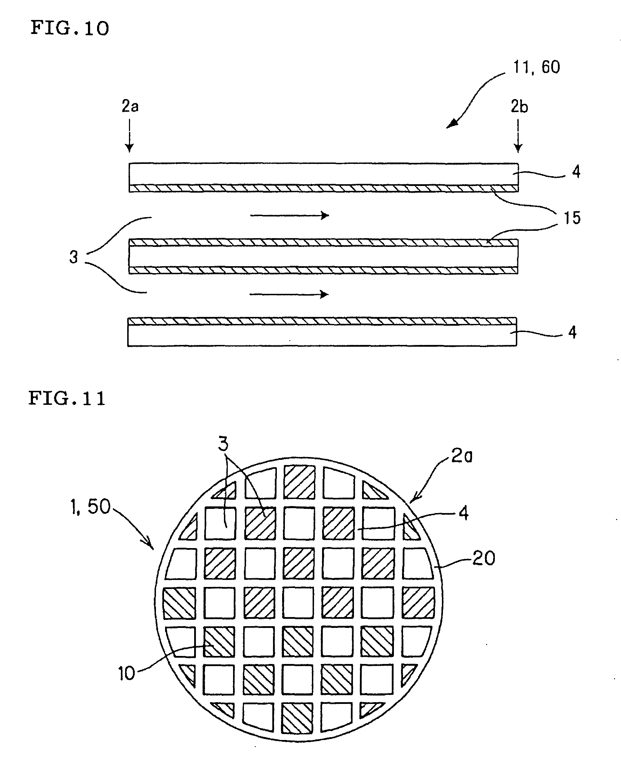

Figs. 8 to 10 are views schematically showing an example of a conventional catalyst converter. Fig. 8 is a front view (view of an end face), and Fig. 9 is a cross-sectional view showing a cross-section in a direction along the cells (axial direction). Fig. 10 is a partially enlarged view showing an enlarged partition walls in a cross section in a direction along the cells for explanation to show a catalyst layer. A catalyst converter 60 shown in Figs. 8 to 10 is constituted by a honeycomb structure 11 where the outer shape expressed by the outer wall 20 is cylindrical and where the inside structure is a honeycomb structure. Exhaust gas flows in the cells 3 from one end face 2a side of the catalyst converter 60 and flows outside from the other end face 2b side. In this process, target components contained in exhaust gas are brought into contact with the catalyst layer 15 (omitted in Figs. 8 and 9) provided on a surface of the partition walls 4 and decomposed, and thereby the exhaust gas is purified. The catalyst layer 15 has a structure where a noble metal is loaded inside fine pores of a coat layer of an oxide (alumina, ceria, zirconia, or the like).

The catalyst converter 60 has a problem that, since exhaust gas flows in parallel with the catalyst layer 15, diffusion distance in which target components of the exhaust gas has to transfer to reach the catalyst layer 15 is long to make the target components hardly reach the catalyst layer 15, and thereby purification efficiency is low. Therefore, an improvement plan is given to the catalyst converter 60, where a hydraulic diameter of the cells 3 is made small and where surface area of the partition walls 4 is made large to attempt improvement in purification efficiency. As a concrete means, by increasing the number of cells 3 per unit area (cell density), there is employed a method in which an area where exhaust gas contacts with the catalyst layer 15 is made large as well as a distance between exhaust gas and the catalyst layer 15 is made small. Patent Document 1: JP-A-2003-33664

### DISCLOSURE OF THE INVENTION

In recent years, there has been proposed a mode where ventilation is ensured by increasing porosity of the partition walls, the inlet and the outlet of the cells are alternatively plugged to make exhaust gas pass through the partition walls, and a catalyst layer is formed on pores inside the partition walls.

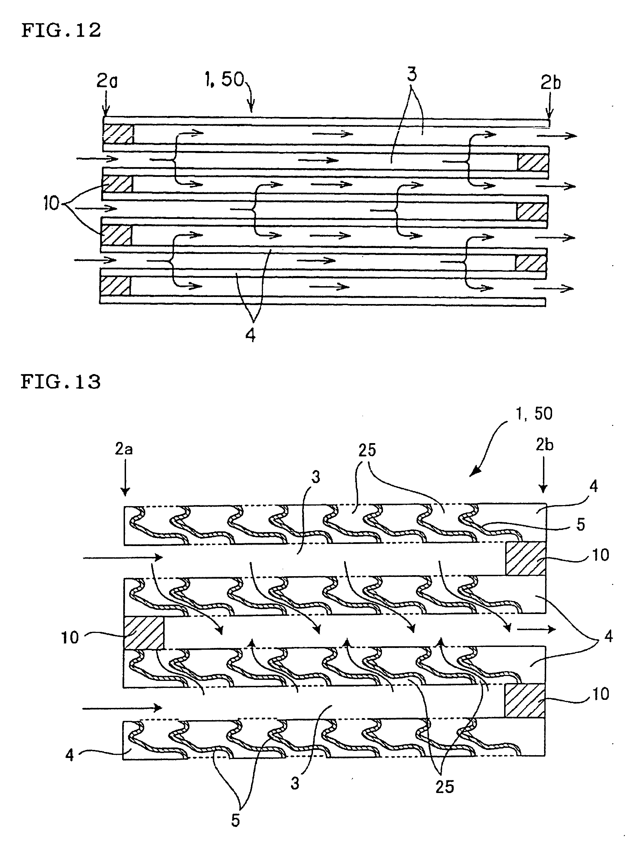

Figs. 11 to 13 are views schematically showing an example of a catalyst converter. Fig. 11 is a front view (view of an end face), and Fig. 12 is a cross-sectional view showing a cross section in a direction along the cells (axial direction). Fig. 13 is a partially enlarged view showing an enlarged partition walls in a cross section in a direction along the cells for explanation to show a catalyst layer. A catalyst converter 50 shown in Figs. 11 to 13 is constituted by a honeycomb structure 1 (substrate) where the outer shape shown by the outer wall 20 is cylindrical and where the inside structure is a honeycomb structure. Exhaust gas flows in the cells 3 from one end face 2a side of the catalyst converter 50, passes through the partition walls 4 to flow in the adjacent cells 3 since the exhaust gas cannot flow out from the other end face2b side in the same cells 3 because of the plugged portions 10, and then flows outside from the other end face 2b side. In this process, target components contained in exhaust gas are brought into contact with the catalyst layer 5 (omitted in Figs. 11 and 12) provided on a surface forming pores 25 (pore-forming surface) inside the partition walls 4 and decomposed, and thereby the exhaust gas is purified. The catalyst layer 5 has a structure where catalytic active components such as noble metals are loaded inside fine pores of a coat layer of an oxide (alumina, ceria, zirconia, zeolite, or the like).

Since exhaust gas passes through the pores 25 of the partition walls 4 having a small hydraulic diameter in comparison with the cells 3 in catalyst converter 50, if a thin and even catalyst layer 5 can be loaded on the pore-forming surface, the distance between exhaust gas and the catalyst layer 5 becomes smaller, and an area where exhaust gas is brought into contact with the catalyst layer 5 can be increased, and thereby purification efficiency is greatly improved.

However, there is a case in the catalyst converter 50 that a crack is caused in a partition wall 4 during use, which sometimes leads to damage. Therefore, to take a measure for the damage, analysis was given regarding cracks. As a result, it was found that a crack is easily caused in the vicinity of the end faces 2a and 2b, i.e., the inlet and the outlet for the exhaust gas. As a result of further investigation, it was found that the main cause of crack generation is that there is a large difference in thermal expansion coefficient between a part of the partition walls 4 in contact with a plugged portion 10 having no pore-forming surface (pore) and less catalyst layers 5 and the other part of the partition walls 4 having many catalyst layers 5 provided on a pore-forming face (pore) near the above part because there is a large difference in thermal expansion coefficient between the catalyst layers 5 and the partition walls 4 (honeycomb structure 1 (substrate)) where the catalyst layers 5 are provided. Through the investigation, it was confirmed that exhaust gas passing through the partition walls 4 is prone to concentrate in the vicinity of the inlet and the outlet of the catalyst converter 50 and that thermal deterioration of the catalyst layer 5 located at the portions is severe. It was found that this promotes generation of a crack due to the above thermal expansion difference. Further, it was confirmed that, since more exhaust gas flows in the cells 3 located in the central portion of the catalyst converter 50 than in the cells 3 on the outer wall 20 side, the catalyst layers 5 provided on a pore-forming surface of the partition walls 4 located in the central portion has severer thermal deterioration.

The present invention has been made on the basis of the above investigation results in view of the above circumstances and aims to provide a catalyst converter where thermal stress is dispersed to suppress local temperature rise in the vicinity of the inlet and outlet in order to inhibit generation of a crack in a catalyst converter. To achieve the aim, the present invention provides the following means.

That is, according to the present invention, there is provided a honeycomb catalyst body comprising: porous partition walls having a large number of pores and disposed so as to form a plurality of cells extending between two end faces, a plurality of plugged portions having a predetermined length and disposed so as to plug the plurality of cells on one of the two end faces or inside the cells, and a catalyst layer containing a catalyst loaded in layers on a surface forming the pores of the partition walls; wherein the honeycomb catalyst body has a deviation in face positions on the inner side of the cells perpendicular to the direction in which the cells extend.

"Face positions on the inner side of the cells perpendicular to a direction in which the cells extend" means a position of two faces which do not contact with partition walls of a plurality of plugged portions having a predetermined length for plugging cells and a position of faces on the inner side of cells. The inner side of the cell means the interior side of the cells viewed from the end face and the side of the center in a direction in which the cells extend. "Has a deviation in face positions on the inner side of the cells perpendicular to the direction in which the cells extend" shows a state of having a deviation in face positions on the inner side of the cells between two kinds of face positions which do not contact with partition walls of the plugged portions. "Has a deviation in face positions" means that the face positions of a plurality of plugged portions are different from one another. In many cases, cells are plugged in such a state that the faces on the cell outer side between two faces which do not contact with partition walls of a plurality of plugged portions having a predetermined length are even with the end face of the honeycomb catalyst body. However, in a honeycomb catalyst body of the present invention, there may be present a deviation in face positions on the cell outer side. Incidentally, in the present specification, "has a deviation" means "to deviate" or "to be uneven". In addition, a deviation in the present invention is in a "not uniform" and "uneven" state and intentionally formed state.

In a honeycomb catalyst body of the present invention, a cross-sectional shape of a cell plugged with a plugged portion, i.e., a shape of a cross-section taken along a plane perpendicular to a direction in which a cell extends is not particularly limited and may be a shape suitable for use. Concretely, there may be employed a circle, an ellipse, an oval, a trapezoid, a quadrangle, a hexagon, or an asymmetric deformed shape.

It is preferable that the honeycomb catalyst body of the present invention has a deviation in positions where the plurality of plugged portions are disposed.

Since a plugged portion plugs a cell on one of the two faces of the honeycomb catalyst body or inside the cell, a position where plugged portions are disposed is a position of plugged portions in cells extending between two end faces. Since a face position of a plugged portion changes if the position where the plugged portion is disposed is changed, it is possible to give a deviation in face positions on the inner side of the cells perpendicular to a direction in which the cells extend of a plurality of plugged portions having a predetermined length by this mode.

It is preferable that the honeycomb catalyst body of the present invention has a deviation in length of the plurality of plugged portions.

A length of a plugged portion means a length of a plugged portion in a direction in which a cell extends. In the case of a plugged portion disposed on one of the two end faces, it corresponds to a depth of the plugged portion toward the inside of the cell from the end face. Since a face position of a plugged portion changes if length of a plugged portion is changed, it is possible to give a deviation in face positions on the inner side of the cells perpendicular to a direction in which the cells extend of a plurality of plugged portions having a predetermined length by this mode. Incidentally, a plurality of plugged portions may have deviations in both disposition and length.

In the case that a honeycomb catalyst body of the present invention has a deviation in length of the plurality of plugged portions, a difference between the maximum length and the minimum length of the plurality of plugged portions having a deviation in length is preferably 1 mm or more and 10 mm or less. When the difference is 1 mm or less, an inhibitive effect of crack generation is small. When the difference is 10 mm or more, stress concentration in maximum and minimum portion becomes rather big, and generation of cracks is prone to cause. And it also causes a problem that engine control becomes difficult because of a deviation of pressure loss. The difference is more preferably 1.5 mm or more and 5 mm or less. When the difference is 1.5 mm or more and 5 mm or less, even in circumstances such as a honeycomb catalyst body is mounted just under an engine where an exhaust gas temperature fluctuates widely, a sufficient inhibitive effect of crack generation can be obtained.

In a honeycomb catalyst body of the present invention, in the case that a honeycomb catalyst body of the present invention has a deviation in length of the plurality of plugged portions, the deviation (standard deviation (σ)) in length of the plurality of plugged portions is preferably 0.5 mm or more and 10 mm or less (with the number of data being 20 or more). When the standard deviation is 0.5 mm or less, an inhibitive effect of crack generation is insufficient. When the standard deviation is 10 mm or more, stress concentration in maximum and minimum portion becomes rather big, and generation of cracks is prone to cause. And it also causes a problem that engine control becomes difficult because of a deviation of pressure loss. The standard deviation is more preferably 1.0 mm or more and 2.0 mm or less. When the standard deviation is 10 mm or more and 2.0 mm or less, even a honeycomb catalyst body has any outer shape, a sufficient inhibitive effect of crack generation can be obtained.

In a honeycomb catalyst body of the present invention, the number of pairs (set) of plugged cells adjacent to each other is preferably 18 or more on one or both of the two end surfaces. By plugging adjacent cells at the same face positions, gas becomes hard to flow in the adjacent cells in view of total honeycomb catalyst body. As a result, temperature of the adjacent cell portions hardly rises. Therefore disposing the adjacent plugged portions such as central portions of honeycomb catalyst body where temperature rises easily at the time of practical use, local heat deterioration or melting of catalyst at the positions can be inhibited. When the number of pairs of plugged cells is 18 or less, an inhibitive effect of temperature rise is insufficient and local deterioration of catalyst can not be inhibited. Incidentally, when adjacent cells are plugged at a plane perpendicular to the communicating direction of cells, the "adjacent cells" to "adjacent cells" preferablyhave deviations defined by the present invention. But not limited to these, for example, it can be disposed at the same face positions.

In the present inventive honeycomb catalyst body having the structure that cells adjacent each other are plugged, it is preferable that an additional plugging rate defined by the expression (B/A)×100: wherein A stands for the number of plugged portions of cells whose every adjacent cell is not plugged in a plane perpendicular to the direction in which the cells extend, and B stands for the number of the additional plugged portions formed in a state when the adjacent cells are additionally plugged so as to make the certain numbers of adjacent cells plugged each other; is preferably 5% or more and less than 30%. When the additional plugging rate is 5% or less, an inhibitive effect of temperature rise is insufficient and localized deterioration of the catalyst cannot be inhibited. On the other hand, when the additional plugging rate is 30% or more, pressure loss increased markedly. The additional plugging rate is more preferably 10% or more and 25% or less. When the additional plugging rate is 10% or more and 25% or less, purification rate after deteriorated and pressure loss are balanced well. As an example of the state that plugged portions are composed only of the cells of which every adjacent cell is not plugged in a plane perpendicular to the direction in which the cells extend, one may give a state wherein the plugging is made in checker flag pattern.

In a honeycomb catalyst body of the present invention, it is preferable that the catalyst comprises: a carrier coat of active alumina, one or more noble metals selected from the group consisting of Pt, Rh, and Pd and dispersedly loaded inside the carrier coat, and one or more compounds selected from the group consisting of cerium oxide, zirconium oxide, and silica and contained in the carrier coat.

The total amount of the noble metals is preferably 0.17g or more and 7.07g or less per volume liter of a honeycomb catalyst body. Incidentally, the above catalyst corresponds to a gasoline engine exhaust gas purification three way catalyst. However, a honeycomb catalyst body of the present invention can employ as the catalyst a gasoline engine or diesel engine exhaust gas purification oxidizing catalyst, a NOx selectively reducing SCR catalyst, a NOx adsorbent catalyst, or the like.

In a honeycomb catalyst body of the present invention, it is preferable that the porous partition walls are formed of a material containing ceramic as a main component and that the ceramic is at least one kind selected form the group consisting of silicon carbide, cordierite, aluminum titanate, sialon, mullite, silicon nitride, zirconium phosphate, zirconia, titania, alumina, and silica.

Particularly, ceramic such as silicon carbide, cordierite, mullite, silicon nitride, or alumina is suitable because of high alkali resistance. In addition, oxide-based ceramics are preferable because it can be produced at low costs.

In a honeycomb catalyst body of the present invention, it is preferable that the partition walls has a mean maximum image distance of 30 µm or more and 400 µm or less and a porosity of 40% or more and 65% or less in a state that the catalyst layer is loaded. When the mean maximum image distance is 30 µm or less and/or the porosity is 40% or less, a serious problem in pressure loss occurs. Moreover, when the thickness of partition wall is thin (500µm or less), the mean maximum image distance is preferably 30 to 150 µm in view of strength. When the thickness of partition wall is thick (100µm or more), the mean maximum image distance is preferably 100 to 400 µm in view of pressure loss. And when the exhaust gas contains particulate matters such as soot and the like, the mean maximum image distance is preferably 200 µm or more in view of prevention of pore clogging.

Next, according to the present invention, there is provided an exhaust gas purification system using as a catalyst converter any of the above honeycomb catalyst bodies.

Since a honeycomb catalyst body of the present invention has a deviation in face positions on the inner side of the cells perpendicular to a direction in which the cells extend of a plurality of plugged portions disposed so as to plug each of the plurality of cells, stress is dispersed without concentrating on one face perpendicular to a direction in which the cells extend. Therefore, a stress value is reduced, and it is possible to lower probability of damage. For example, if the plugged portions have the same disposition and length, the face positions on the inner side of the cells perpendicular to a direction in which the cells extend in a plurality of plugged portions become even. It causes a sudden change of thermal expansion properties in a honeycomb catalyst body with a face perpendicular to a direction in which the cells extend including the face positions even on the inner side of the cells serving as a boundary, and concentration of stress on the face due to a difference in thermal stress is easily caused, which raises probability of causing damage during use. Such a problem can be avoided by the present invention.

A honeycomb catalyst body of the present invention has a deviation in position where a plurality of plugged portions are disposed in a preferable mode, which generates a deviation in face positions on the inner side of the cells perpendicular to a direction in which the cells extend of a plurality of plugged portion. In addition, since face positions on the outer side of the cells perpendicular to a direction in which the cells extend are not even with the end face in the case that length of the plugged portions is almost uniform, pockets are inevitably formed on two end face sides. Since the pockets are parts of the cells each forming a blind alley, when a honeycomb catalyst body of the present invention is used as a catalyst converter, exhaust gas flowing into the pockets from one end face side is not exhausted from the other end face side via the same cells. However, since exhaust gas flows in the pockets and collide with the plugged portions to raise pressure inside the pockets. By the pressure, exhaust gas passes through the partition walls forming the pockets. In the process, target components contained in exhaust gas are brought into contact with a catalyst layer provided on a face forming pores (pore-forming face) inside the partition walls and decomposed, and thereby the exhaust gas is purified. In addition, since a flow of exhaust gas is generated in adjacent cells (not pockets) in pockets on the exhaust gas outlet side on the other end face, a pressure gradient is generated inside the cells without a pocket, and pressure in the position on even just a little upstream side (inlet side) from the outlet is higher than that at the outlet. On the other hand, since pressure inside the pockets is the same as that at the outlet, the pressure is low in comparison with that in the cells without a pocket. This difference in pressure causes a flow of passing through the partition walls from cells without a pocket to pockets. In this process, target components contained in exhaust gas are brought into contact with a catalyst layer provided on a face forming pores (pore-forming face) inside partition walls and decomposed, and thereby exhaust gas is purified. In the case that plugged portions are formed to be even with an end face and that length of the plugged portions is changed to give a deviation in face positions on the inner side of the cells perpendicular to a direction in which the cells extend, it is apprehended that a percentage of partition walls which cannot be used due to the presence of plugged portions may be too large to ignore depending on the length of the plugged portions. However, in such a mode that positions where the plugged portions having almost the same length are disposed are deviated (changed) to cause a deviation in face positions on the inner side of the cells perpendicular to a direction in which the cells extend, partition walls can effectively be used.

Since, in a honeycomb catalyst body of the present invention, the number of pairs of plugged cells adjacent to each other is 18 or more on one or both of the two end surfaces in a preferable mode, it can inhibit a local temperature rise of partition walls. The reason is as follows. In the state that one of the adjacent cells is not plugged, exhaust gas flows into the cell without a plugged portion, and a predetermined amount or more of exhaust gas passes through or contact partition walls. However, if both of the adjacent cells are plugged, a mass ratio of partition walls to an amount of exhaust gas can be raised in the portion.

On the other hand, in a honeycomb catalyst body of the present invention, since the additional plugging ratio is 5% or more and less than 30% of the number of whole cells in a preferable mode, pressure loss is not increased.

### BRIEF DESCRIPTION OF THE DRAWINGS

Fig. 1 is a cross-sectional view schematically showing an embodiment of a honeycomb catalyst body of the present invention.
Fig. 2 is a view schematically showing another embodiment of a honeycomb catalyst body of the present invention, showing a part of the front (a view showing an end face).
Fig. 3 is a view schematically showing another embodiment of a honeycomb catalyst body of the present invention, showing a part of the front (a view showing an end face).
Fig. 4 is a view schematically showing another embodiment of a honeycomb catalyst body of the present invention, showing a part of the front (a view showing an end face).
Fig. 5 is a view schematically showing another embodiment of a honeycomb catalyst body of the present invention, which is a cross-sectional view showing a cross section in a direction along the cells (axial direction).
Fig. 6 is a view schematically showing another embodiment of a honeycomb catalyst body of the present invention, which is a cross-sectional view showing an enlarged part in the vicinity of an end face.
Fig. 7 is a view schematically showing another embodiment of a honeycomb catalyst body of the present invention, which is a cross-sectional view showing an enlarged part in the vicinity of an end face.
Fig. 8 is a front view schematically showing an example of a catalyst converter.
Fig. 9 is a cross-sectional view schematically showing an example of a catalyst converter.
Fig. 10 is a partially enlarged view schematically showing an example of a catalyst converter.
Fig. 11 is a front view schematically showing an example of a catalyst converter.
Fig. 12 is a cross-sectional view schematically showing an example of a catalyst converter.
Fig. 13 is a partially enlarged view schematically showing an example of a catalyst converter.
Fig. 14 is a view schematically showing another embodiment of a honeycomb structure of the present invention, which is a plane view showing an enlarged part of an end face.
Fig. 15 is a SEM photograph showing an embodiment of a honeycomb structure of the present invention.

### EXPLANATION OF SYMBOLS

1, 11... honeycomb structure, 100, 200, 310, 320, 330... honeycomb catalyst body, 2a... end face, 2b... end face, 3... cell, 4... partition wall, 5... catalyst layer, 20... outer wall, 25... pore, 50, 60... catalyst converter.

### BEST MODE FOR CARRYING OUT THE INVENTION

Embodiments of the present invention will hereinbelow be described with suitably referring drawings. However, the present invention is by no means limited to these embodiments, and various kinds of changes, modification, improvement, substitution may be added within the range in which the gist of the present invention is not missed on the basis of knowledge of those skilled in the art. For example, though a drawing shows a suitable embodiment of the present invention, the present invention is not restricted by a mode or information shown in the drawings. A means similar or equal to a means described in this specification is applied upon carrying on or investigating the present invention. However, a suitable means is a means described below.

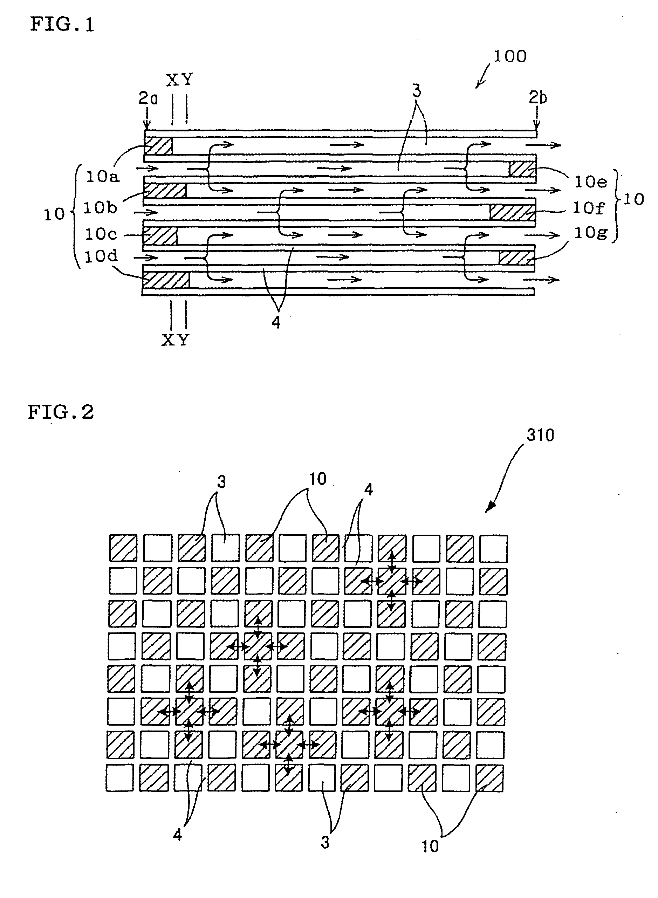

Fig. 1 is a view schematically showing an embodiment of a honeycomb catalyst body of the present invention, which is a cross-sectional view showing a cross section in a direction along the cells (axial direction). A honeycomb catalyst body 100 shown in Fig. 1 has a constitution of a honeycomb structure (substrate) having a cylindrical outer shape shown by the outer wall and a honeycomb structure on the inner side. Concretely, the honeycomb catalyst body 100 is provided with porous partition walls 4 having a large number of pores and disposed so as to form a plurality of cells 3 extending between two end faces 2a and 2b, a plurality of plugged portions 10 having a predetermined length and disposed so as to plug cells 3 on the two end faces 2a and 2b (Plugged portions 10a to 10g are present in a cross section shown in Fig. 1), and a catalyst layer containing a catalyst loaded in layers on a surface forming the pores (pore-forming surface).

In a honeycomb catalyst body 100, porous partition walls 4 are formed of a material containing cordierite as the main component and have a mean maximum image distance of 40 µm and a porosity of 50% in a state that a catalyst layer is loaded thereon. The honeycomb catalyst body 100 employs a catalyst having a carrier coat of an active alumina, a noble metal, Pt, dispersed and loaded inside the carrier coat, and cerium oxide and zirconium oxide contained in the catalyst coat. The honeycomb catalyst body 100 can be used as a catalyst converter for purifying gasoline engine exhaust gas. In this case, the gasoline engine exhaust gas flows into cells 3 from one end face 2a side, does not flow outside from the other end face 2b side of the same cells 3 because of plugged portions 10 (plugged portions 10a to 10g) present in the cells 3 but passes through the partition walls 4 to flow in the adjacent cells 3, and flows outside from the other end face 2b side as shown by the arrow of Fig. 1. In this process, target components contained in the exhaust gas are brought into contact with a catalyst layer provided on a surface forming pores inside the partition walls 4 (pore-forming surface) and decomposed, and thereby the exhaust gas is purified.

The honeycomb catalyst body 100 has a deviation in length (length in the direction in which the cells 3 extend) of a plurality of plugged portions 10 (plugged portions 10a to 10g), which causes a deviation in face positions on the inner side of the cells 3 perpendicular to a direction in which the cells 3 extends of the plurality of plugged portions 10 (plugged portions 10a to 10g). The honeycomb catalyst body 100 is different in this point from the aforementioned catalyst converter 50 (see Fig. 12). That is, as shown in Fig. 1, a plurality of plugged portions 10a to 10g have two faces which do not contact with partition walls 4 of each of the plurality of plugged portions, and positions of faces on the inner side of cells 3 are not the same. As a whole, the positions are not even but deviated. For example, the face position on the inner side of the cells 3 perpendicular to the direction in which the cells 3 extend in the plugged portion 10a is present on an X-X cross section. However, the face position on the inner side of the cells 3 perpendicular to the direction in which the cells 3 extend in the plugged portion 10b is present on a Y-Y cross section, which is different from that of the plugged portion 10a. Likewise, the plugged portions 10c to 10g have different face positions on the inner side of the cells 3 perpendicular to the cells 3.

The term "a mean maximum image distance" used in the present specification refers to a property value measured by image analysis. Concretely, at least 20 visions of SEM photographs of a cross section of a partition wall were observed with regard to a vision of length × width = t × t in the case that the partition wall thickness was defined as "t". Next, in each of the visions observed above, the maximum linear distance in a gap was measured, and the average value of the maximum linear distances measured in all the visions was defined as the "a mean maximum image distance".

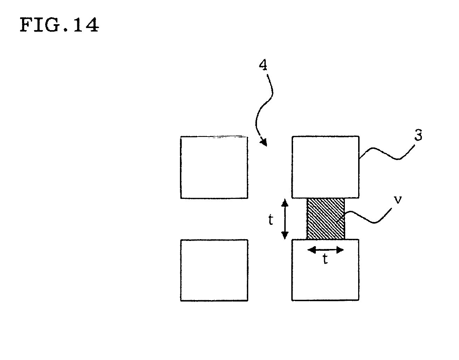

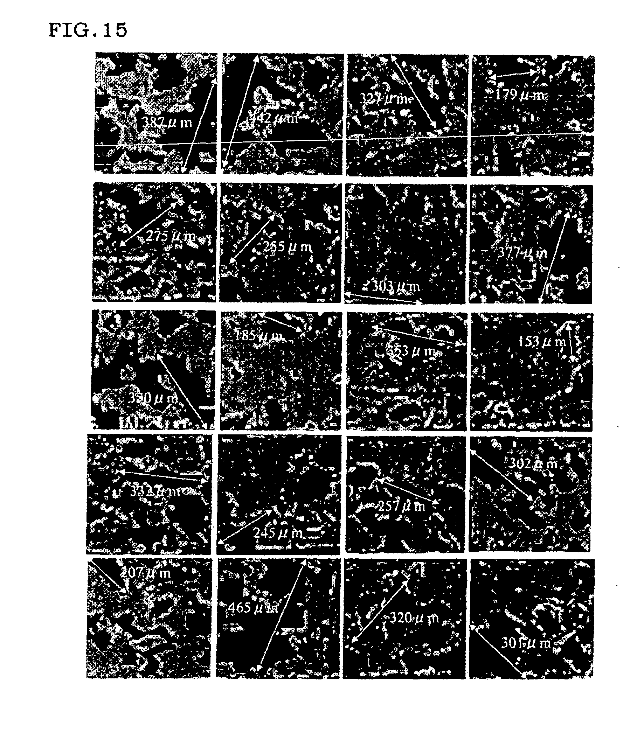

For example, in a plane view showing an enlarged part of an end face of a honeycomb structure shown in Fig. 14, 20 visions of SEM photographs were taken with regard to an area of "t × t" of a partition wall as one observation area (vision), and run to image analysis. Then, as shown in Fig. 15, a maximum linear distance in each vision was measured and a mean value was calculated. In 20 visions of SEM photographs shown in Fig. 15, a maximum linear distance measured from top extreme left to right and from top to down was 387 µm, 442 µm, 327 µm, 179 µm, 275 µm, 255 µm, 303 µm, 377 µm, 350 µm, 185 µm, 353 µm, 153 µm, 332 µm, 245 µm, 257 µm, 302 µm, 207 µm, 465 µm, 320 µm and 301 µm. In this case, a mean maximum image distance was 301 µm, respectively.

The SEM photographs shown in Fig. 15 were taken at 50-fold magnification. For image analysis, commercially available image analysis software such as Paint Shop Prox (Trade name: manufactured by COREL Corporation) may be used. Any magnification may be adopted as log as clear image can be gained and any magnification between 10 and 1000 may be selected.

The term "porosity" used in the present specification refers to a property value measured by image analysis. Concretely, at least 5 visions of SEM photographs of a cross section of a partition wall were observed with regard to a vision of length × width = t × t in the case that the partition wall thickness was defined as "t". Next, in each of the visions observed above, gap area percentage was obtained and raised to 3/2^{th} power to obtain a value. The average value of all the values for the visions was defined as the "porosity".

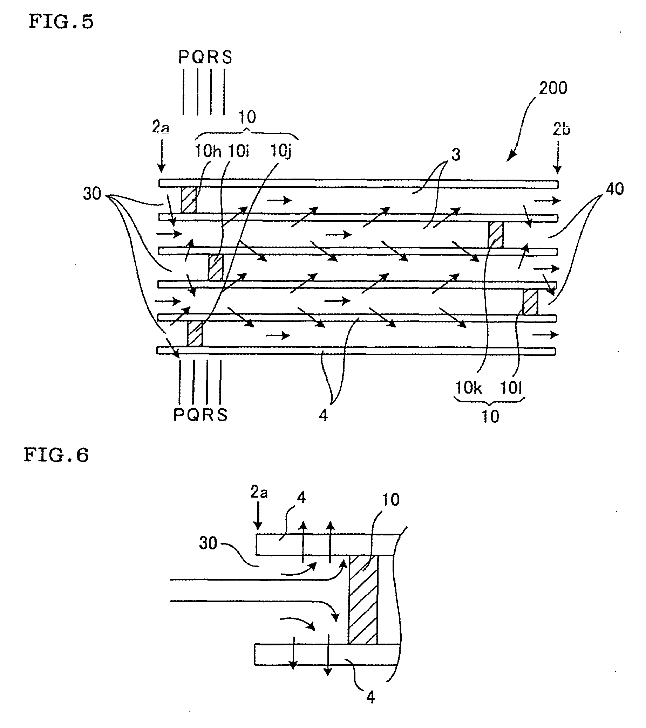

Figs. 5 to 7 are views schematically showing other embodiments of a honeycomb catalyst body of the present invention. Fig. 5 is a cross-sectional view showing a cross section in a direction along the cells (axial direction), and Figs. 6 and 7 are cross-sectional views each showing an enlarged part in the vicinity of an end face. The honeycomb catalyst body 200 shown in Figs. 5 to 7 is constituted by a honeycomb structure (substrate) where the outer shape shown by the outer wall is cylindrical and where the inside structure is a honeycomb structure like the aforementioned honeycomb catalyst body 100. Concretely, the honeycomb catalyst body 200 is provided with porous partition walls 4 having a large number of pores and disposed so as to form a plurality of cells 3 extending between two end faces 2a and 2b, a plurality of plugged portions 10 (plugged portions 10h to 101 are present in a cross section shown in Fig. 5) having a predetermined length and disposed so as to plug the plurality of cells 3 on the two end faces 2a and 2b, and a catalyst layer containing a catalyst loaded in layers on a surface forming pores (pore-forming face) of the partition walls 4.

In a honeycomb catalyst body 200, porous partition walls 4 are formed of a material containing silicon carbide as the main component and have a mean maximum image distance of 50 µm and a porosity of 60% in a state that a catalyst layer is loaded thereon. The honeycomb catalyst body 200 employs a catalyst having a carrier coat of an active alumina, a noble metal, Pt and Rh, dispersed and loaded inside the carrier coat, and cerium oxide contained in the catalyst coat. The honeycomb catalyst body 200 can be used as a catalyst converter for purifying gasoline engine exhaust gas. In this case, the gasoline engine exhaust gas flows into cells 3 from one end face 2a side, does not flow outside from the other end face 2b side of the same cells 3 because of plugged portions 10 (plugged portions 10h to 101) present in the cells 3 but passes through the partition walls 4 to flow in the adjacent cells 3, and flows outside from the other end face 2b side as shown by the arrow of Fig. 5. In this process, target components contained in the exhaust gas are brought into contact with a catalyst layer provided on a surface forming pores inside the partition walls 4 (pore-forming surface) and decomposed, and thereby the exhaust gas is purified.

The honeycomb catalyst body 200 has a deviation in disposition (position of plugged portions 10 in the cells 3) of a plurality of plugged portions 10 (plugged portions 10a to 10g), which causes a deviation in face positions in the inner side of the cells 3 perpendicular to a direction in which the cells 3 extends of the plurality of plugged portions 10 (plugged portions 10h to 101). The honeycomb catalyst body 200 is different in this point from the aforementioned catalyst converter 50 (see Fig. 12). That is, as shown in Fig. 5, a plurality of plugged portions 10h to 101 have two faces which do not contact with partition walls 4 of each of the plurality of plugged portions, and positions of faces on the inner side of cells 3 are not the same. Also, positions of faces on the outer side of the cells 3 are not the same. As a whole, the positions are not even but deviated on both sides. For example, the face position on the inner side of the cells 3 perpendicular to the direction in which the cell 3 extend of the plugged portion 10h is present on a Q-Q cross section, and the face position on the outer side of the cell 3 is present on a P-P cross section. However, the face position on the inner side of the cells 3 perpendicular to the direction in which the cell 3 extend of the plugged portion 10i is present on a S-S cross section, and the face position on outer side of the cell 3 is present on a R-R cross section. That is, they are different from those of the plugged portion 10h. Likewise, the plugged portions 10j to 101 have different face positions on the inner side of the cells 3 and the outer side of the cell 3 perpendicular to the direction in which the cells 3 extend.

In the honeycomb catalyst body 200, in order to give a deviation in position where a plurality of plugged portions 10 (plugged portions 10h to 101) are disposed, a position where each of the plugged portions 10h to 101 is disposed is inside the cell 3 (interior from the end faces 2a and 2b) and not even with the end faces 2a and 2b. Therefore, in the honeycomb catalyst body 200, inlet side pockets 30 on the end face 2a side and outlet side pockets 40 on the end face 2b are formed unlike the honeycomb catalyst body 100. Each of the pockets 30 and 40 is a part of a blind-alley cell 3 due to a plugged portion 10. Fig. 6 shows the state that exhaust gas flowing into a pocket 30 on the inlet side from an end face 2a side passes through the partition walls 4 forming the pocket 30. In addition, Fig. 7 shows the state that exhaust gas passes through the partition walls 4 forming the pocket 40 in a pocket 40 on the outlet side on the other end face 2b side.

Figs. 2 to 4 are view schematically showing other embodiments of a honeycomb catalyst body of the present invention, each showing a part of the front view (view of an end face). Specifically, Figs. 2 to 4 show examples of disposition of adjacent cells which are plugged on one plane (end faces) perpendicular to the cell extending direction. Each of the honeycomb catalyst bodies 310, 320, and 330 shown in Figs. 2 to 4 is constituted by a honeycomb structure (substrate) where the outer shape shown by the outer wall is cylindrical and where the inside structure is a honeycomb structure like the aforementioned honeycomb catalyst bodies 100 and 200. Concretely, each of the honeycomb catalyst bodies 310, 320, and 330 is provided with porous partition walls 4 having a large number of pores and disposed so as to form a plurality of cells 3 extending between two end faces, a plurality of plugged portions 10 having a predetermined length and disposed so as to plug the plurality of cells 3 on the two end faces, and a catalyst layer containing a catalyst loaded in layers on a surface forming pores (pore-forming face) of the partition walls 4. Each of the aforementioned honeycomb catalyst bodies 100 and 200 has a cell density of several tens cells/cm², and the cell density of each of the honeycomb catalyst bodies 310, 320, and 330 is almost the same as those of the aforementioned honeycomb catalyst bodies 100 and 200. A part of the cells is shown in Figs. 2 to 4. For example, a cylindrical honeycomb catalyst body having a diameter of 100 mm has several hundreds to several thousands of cells.

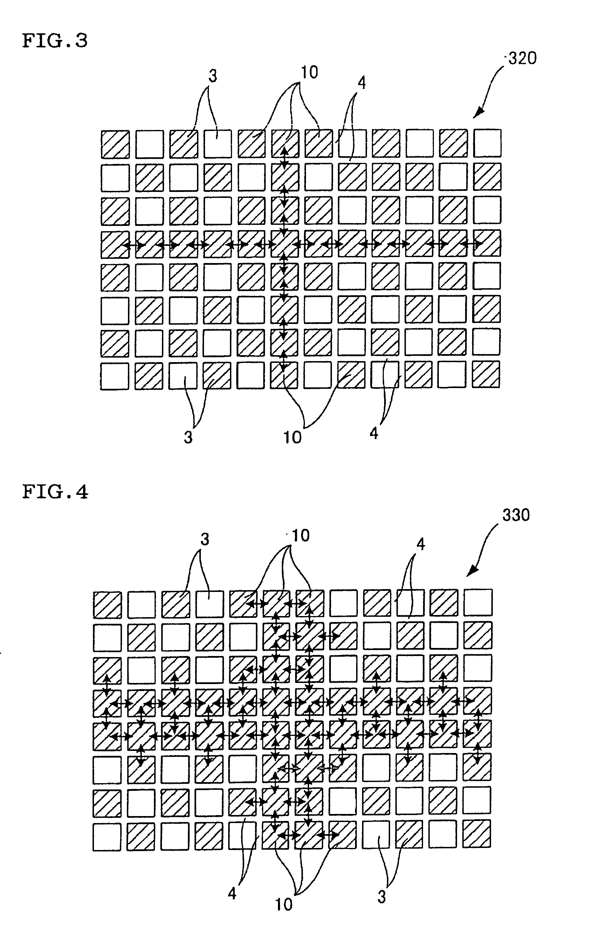

In the honeycomb catalyst body 310, the number of pairs of plugged cells 3 adjacent to each other shown by arrows on the end face shown in Fig. 2 is 20. In the honeycomb catalyst body 320, the number of pairs of plugged cells 3 adjacent to each other shown by arrows on the end face shown in Fig. 3 is 18. In the honeycomb catalyst body 330, the number of pairs of plugged cells 3 adjacent to each other shown by arrows on the end face shown in Fig. 4 is 67.

The embodiments of a honeycomb catalyst body of the present invention has been described. A honeycomb catalyst body can be manufactured by preparing a honeycomb structure according to a conventionally known production method of a diesel particulate filter (DPF) and loading a catalyst according to a conventionally known method. Concretely, catalyst slurry containing a catalyst is prepared in the first place, and then the catalyst slurry is coated on pore-forming surfaces of the partition walls of a honeycomb structure by a suction method or the like. Then, they are dried at room temperature or under heating conditions to obtain a honeycomb catalyst body of the present invention.

### EXAMPLES

### (Examples 1 to 8 and Comparative Example 1)

With respect to 100 parts by mass of a cordierite-forming raw material prepared at a predetermined ratio of a combination of a plurality of components selected from the group consisting of talc, kaolin, calcined kaolin, alumina, calcium hydroxide, and silica so as to have a chemical composition of 42 to 56% by mass of SiO₂, 0 to 45% by mass of Al₂O₃, and 12 to 16% by mass of MgO, 12 to 25 parts by mass of graphite as a pore former and 5 to 15 parts by mass of synthetic resin were added. Further, a suitable amount of methyl celluloses and surfactant were added, and then water was added. The mixture was kneaded to prepare clay. After the prepared clay was subjected to vacuum deaeration, it was subjected to extrusion forming to obtain a honeycomb formed body. After the honeycomb formed body was dried, it was fired at a maximum temperature of 1400 to 1430°C to obtain a honeycomb fired body. A plugging agent was plugged in the end portions of each of the cells of the honeycomb fired body so as to form a checkerwise pattern, and the honeycomb fired body was fired again to obtain a honeycomb structure having plugged portions plugging cells, the honeycomb structure having a diameter of 105.7 mm, a length of 114.2 mm, a volume of 1 liter, a partition wall thickness of 17 mil (0.432 mm), a cell density of 100 cells/inch² (15.5 cells/cm²) according to Examples 1 to 8 and Comparative Example 1. Incidentally, the pores of the partition walls were formed by suitably adjusting combination and mixing ratio of a cordierite-forming raw material, a particle size of a cordierite-forming raw material, a particle diameter of the pore former, an amount of the pore former to be added, and the like. In addition, length of the plugged portions (depth from an end face) was deviated by adjusting an amount of the plugging agent to plug the cells. An each average length of the plugged portions described in Examples 1 to 8 and Comparative Example 1 is 8 mm.

### (Examples 9)

A length of the plugged portion was set constant (3 mm) and in step of plugging a plugging agent, plugging agent was press fitted toward the inner side of the cells to make face positions on the inner side of the cells to be same position as in Example 1. Therefore, when face positions on the inner side of the cells were located at the 8 mm position from the end face, for example, the cells had 5 mm long pocket from end face.

Next, a mixture (specific surface area of 50 m²/g by BET method, an initially grounded particle diameter of 50 µm) containing active (γ) alumina and ceria as an oxygen adsorbent was subjected to wet grinding using a ball mill to obtain an average ground particle diameter of 5 µm. Then, Pt and Rh are loaded on fine pores of the wet-ground mixture to obtain catalyst slurry having Pt and Rh loaded thereon, having an average grounded particle diameter of 5 µm, and containing active (γ) alumina. Then, a coat layer of the above-prepared catalyst slurry was formed on the surface of the partition walls and pore-forming surface of the honeycomb structured body obtained above by a suction method. Next, by drying by heating, a honeycomb catalyst body was manufactured. Incidentally, mass of the active (γ) alumina and ceria per liter of the honeycomb structure was 100 g, the amount of Pt per liter of the honeycomb structure was 1 g, and the amount of Rh per liter of the honeycomb structure was 0.2 g.

Results of measuring thermal shock test fracture temperature and pressure loss (relative-value) before and after conducting engine endurance test of the honeycomb catalyst bodies (Examples 1 to 9, Comparative Example 1) manufactured above were shown in Table 1 together with a mean maximum image distance of partition walls and porosity of partition walls before loading catalyst, a mean maximum image distance of partition walls and porosity of partition walls after loading catalyst and a difference between the maximum length and the minimum length of the plugged portions and standard deviation (the number of data is 30) of length of the plugged portions.

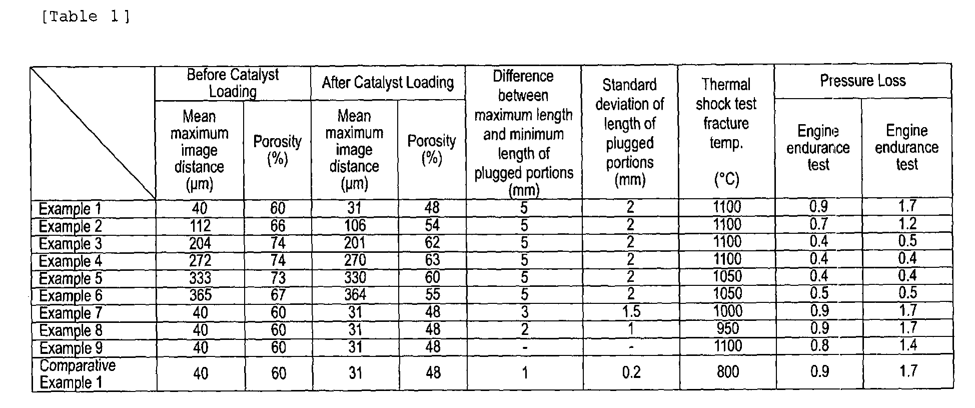

### (Examples 10 to 14)

The honeycomb structures according to Examples 10 to 13 were obtained by adding further plugged portions to the state of a checkerwise pattern and making plugged portions adjacent to the original checkerwise pattern plugged portions to the honeycomb structure according to Examples 1. The honeycomb structure according to Examples 14 was obtained by adding plugged portions in the same manner to the honeycomb structure according to Example 9. The additional plugged portions were all disposed over 8 mm long span from end face. Except for thesepoints, a honeycomb catalyst body was manufactured in the same manner as in Examples 1 to 9 and Comparative Example 1.

Results of measuring and calculating a purification rate (relative value) of initial and after engine endurance test, and pressure loss (relative value) of the honeycomb catalyst bodies manufactured above (Examples 10 to 14) are shown in Table 2 together with an additional plugging ratio.

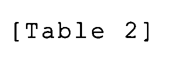

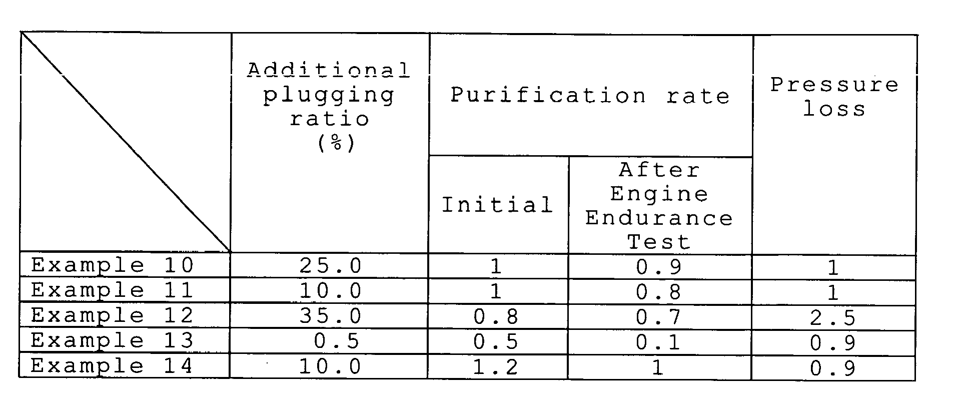

(Investigation) As shown in Tables 1 and 2, it is clear that a honeycomb catalyst body of each of Examples 1 to 9 has high fracture temperature in comparison with a honeycomb catalyst body of Comparative Example 1 and shows excellent thermal resistance. Each of Examples 2 to 6 also achieved low pressure loss, above all Examples 3 to 6 had no pore clogging by particulate matters caused during engine endurance test and maintained low pressure loss after engine endurance test. It is also clear that a honeycomb catalyst body of each of Examples 10 and 11 has an excellent purification rate and small pressure loss in comparison with honeycomb catalyst bodies of Example 12 or 13. And a honeycomb catalyst body of Example 14 also has an improved purification rate in comparison with a honeycomb catalyst body of Example 11.

Incidentally, contents and methods of the test and the evaluation in Examples were as follows:

[Face position of plugged portion]: The face position on the inner side of the cell is measured by inserting narrow round bar to the cell from an end face extending to the target end face (that is the end face located at distant side from the plugged portion). Concretely, narrow round bar, which is slightly narrower than cell diameter, is inserted from the end face extending to the inner side of the cell and when a tip of the bar reached to the inner side of the cell of the plugged portion and sopped, a length of the bar inserted in the honeycomb catalyst body is measured as a depth from the end face to the inner side of the cell. Then the depth is subtracted from the whole length of the honeycomb catalyst body and a face position of plugged portion is defined. Meanwhile diameter of a roundbar (inserted bar) has 60% length of cell length. A tip shape of the round bar (inserted bar) has the same shape of the cell cross-section.

[Length of plugged portion]: When plugged portions are disposed on an end face, length of plugged portions is a distance from the end face measured by the above method. On the other hand, when plugged portions are disposed not on an end face but inner side of the cell, an each depth from both end faces is measured for one plugged portion and length of the plugged portions is calculated by subtracting the both depths from the whole length of the honeycomb catalyst body.

[Mean maximum image distance]: Pore diameters were measured by image analysis, and the mean maximum image distance was calculated. Concretely, at least 20 visions of SEM photographs of a cross section of a partition wall were observed with regard to a vision of length × width = t × t in the case that the partition wall thickness was defined as "t". Next, in each of the visions observed above, the maximum distance in a gap was measured, and the average value of the maximum distances measured in all the visions was defined as the "mean maximum image distance".

[Porosity]: Porosity was measured by image analysis. Concretely, at least 5 visions of SEM photographs of a cross section of a partition wall were observed with regard to a vision of length × width = t × t in the case that the partition wall thickness was defined as "t". Next, in each of the visions observed above, gap area percentage was obtained and raised to 3/2^{th} power to obtain a value. The average value of all the values for the visions was defined as the "porosity".

[Thermal shock test fracture temperature]: There was carried out a repeated thermal shock test by a method in which combustion gas generated by a propane gas burner and air at ordinary temperature were alternately sent into a honeycomb catalyst body. A test of checking presence or absence of a crack after the above test was carried out. With the heating conditions of a gas flow rate of 1.0 Nm³/min for ten minutes and the cooling conditions of a gas flow rate of 0.5 Nm³/min for ten minutes, temperature of the central portion of a honeycomb catalyst body was measured with a sheathed thermocouple having a diameter of 0.5 mm, and the temperature at which a crack was first generated was defined as the "thermal shock test fracture temperature".

[Additional plugging ratio]: When the number of plugged portions in a checkerwise pattern and the number of added plugged portions were defined as A and B, respectively, the value obtained by B/Ax100 was determined as the "additional plugging ratio".

[Purification rate]: Combustion gas consisting of 7% by volume of oxygen, 10% by volume of steam, 10% by volume of carbon dioxide, 200ppm of hydrocarbon (number of moles) , and nitrogen as the rest was sent into a honeycomb catalyst body under the conditions of a space velocity (SV) of 100000h⁻¹ and a temperature of 200°C. Purification rate (%) was calculated from the hydrocarbon concentration of the combustion gas before and after flowing in the honeycomb catalyst body. A relative purification rate of after engine endurance test of each of Example 10 and a relative purification rate of initial and after engine endurance test of Examples 11 to 14 were obtained with defining the initial purification rate of Example 10 as 1.

[Pressure loss]: Pressure loss was measured with circulating air in a honeycomb catalyst body at a flow rate of 0 . 5m³/min under the condition of room temperature. With defining the pressure loss of Example 10 as 1, relative pressure loss of each of Examples 1 to 9, Examples 11 to 14 and Comparative Example 1 was obtained.

[Engine endurance test]: In an exhaust system of a bench test gasoline engine having a 3.5 litter V-6 engine, a catalyst loaded ceramic structure was mounted and put continuous running test at constant-speed of 90 km/hr for 200 hours.

### INDUSTRIAL APPLICABILITY

A honeycomb catalyst body of the present invention is used by being incorporated into, for example, an exhaust gas treatment system as a catalyst converter in various kinds of industrial fields where purification of target components contained in exhaust gas. Particularly, it is effectively used in industrial fields such as the automobile industry, the machinery industry, the pottery industry, and the like, where purification of exhaust gas from an internal combustion engine, a combustion instrument, or the like, is required.

## Claims

1. A honeycomb catalyst body comprising:
porous partition walls having a large number of pores and disposed so as to form a plurality of cells extending between two end faces,
a plurality of plugged portions having a predetermined length and disposed so as to plug the plurality of cells on one of the two end faces or inside the cells, and
a catalyst layer containing a catalyst loaded in layers on a surface forming the pores of the partition walls;
wherein the honeycomb catalyst body has a deviation in face positions on the inner side of the cells perpendicular to the direction in which the cells extend.

2. A honeycomb catalyst body according to Claim 1, wherein the honeycomb catalyst body has a deviation in positions where the plurality of plugged portions are disposed.

3. A honeycomb catalyst body according to Claim 1 or 2, wherein the honeycomb catalyst body has a deviation in length of the plurality of plugged portions.

4. A honeycomb catalyst body according to Claim 3, wherein a difference between the maximum length and the minimum length of the plurality of plugged portions having a deviation in length is 1 mm or more and 10 mm or less.

5. A honeycomb catalyst body according to Claim 3 or 4, wherein the deviation in length of the plurality of plugged portions is 0.5 mm or more and 10 mm or less (with the number of data being 20 or more) as a standard deviation.

6. A honeycomb catalyst body according to any one of Claims 1 to 5, wherein the number of pairs of plugged cells adjacent to each other so as to form a partition wall shared by the plugged cells is 18 or more on one or both of the two end surfaces.

7. A honeycomb catalyst body according to any one of Claims 1 to 6 , wherein the honeycomb catalyst body has plugged portions where adjacent cells are plugged respectively, and an additional plugging rate defined by the expression (B/A)×100:
wherein A stands for the number of plugged portions of cells whose every adjacent cell is not plugged in a plane perpendicular to the direction in which the cells extend, and B stands for the number of the additional plugged portions formed in a state when the adjacent cells are additionally plugged so as to make the certain numbers of adjacent cells plugged each other is 5% or more and less than 30%.

8. A honeycomb catalyst body according to any one of Claims 1 to 7, wherein the catalyst comprises:
a carrier coat of active alumina,
one or more noble metals selected from the group consisting of Pt, Rh, and Pd and dispersedly loaded inside the carrier coat, and
one or more compounds selected from the group consisting of cerium oxide, zirconium oxide, and silica and contained in the carrier coat.

9. A honeycomb catalyst body according to any one of Claims 1 to 8, wherein the porous partition walls is formed of a material containing ceramic as a main component and wherein the ceramic is at least one kind selected form the group consisting of silicon carbide, cordierite, aluminum titanate, sialon, mullite, silicon nitride, zirconium phosphate, zirconia, titania, alumina, and silica.

10. A honeycomb catalyst body according to any one of Claims 1 to 9, wherein the partition walls has a mean maximum image distance of 30 µm or more and 400 µm or less and a porosity of 40% or more and 65% or less in a state that the catalyst layer is loaded.

11. An exhaust gas purification system using as a catalyst converter a honeycomb catalyst body according to any one of Claims 1 to 10.
